# EUROPEAN PATENT APPLICATION

(11) **EP 4 261 775 A1**
(43) Date of publication of application: **18.10.2023**
(21) Application number: 22168459.0
(22) Date of filing: 14.04.2022
(51) Int. Cl.: G06T 7/00, G06T 5/00, G06K 9/62

(54) **MONITORING MEDICAL IMAGES USING A NEURAL NETWORK GENERATED IMAGE ASSESSMENT**

(71) Applicant: Koninklijke Philips N.V., 5656 AG Eindhoven (NL)
(72) Inventor: WUELKER, Christian, Eindhoven (NL); GRAß, Michael, Eindhoven (NL); JANSSEN, Jan Jantje, Eindhoven (NL); GESSERT, Nils Thorben, Eindhoven (NL)
(74) Representative: Philips Intellectual Property & Standards

(57) **Abstract**

Disclosed herein is a medical system (100, 300) comprising a memory (110) storing machine executable instructions (120) and multiple neural networks. The multiple neural networks comprise a noise estimation neural network (122) and at least one image quantification neural network (124). The noise estimation neural network is configured to output a noise estimate (128) of a medical image (126, 126') in response to receiving the medical image as input. The at least one image quantification neural network is configured to output an image attribute (130) of the medical image in response to receiving the medical image as input. The medical system further comprises a computational system (104). Execution of the machine executable instructions causes the computational system to: receive (200) the medical image; receive (202) the noise estimate in response to inputting the medical image into the noise estimation neural network; receive (204) the image attribute in response to inputting the medical image into the image quantification neural network, wherein determination of the image attribute by the image quantification neural network is dependent upon the noise estimate; append (206) the noise estimate and the image attribute from each of the least one image quantification neural network to an image assessment (132); provide (208) a warning signal depending on the image assessment meeting a predetermined criterion.

## Description

### FIELD OF THE INENTION

The invention relates to medical imaging, in particular to monitoring image attributes during medical imaging.

### BACKGROUND OF THE INVENTION

Various tomographic medical imaging techniques such as Magnetic Resonance Imaging (MRI), Computed Tomography, Positron Emission Tomography, and Single Photon Emission Tomography enable detailed visualization of anatomical structure of a subject. The quality of the image can be decreased if there is a fault or other problem with the medical imaging device.

United States Patent application US 2019/0340470 A1 discloses a method for real-time assessment of image information employing a computer that includes one or more processors includes obtaining, via a scanner, a magnetic resonance (MR) image of a region-of-interest and providing data corresponding to at least a portion of the MR image to a deep learning model, where the deep learning model is previously trained based on one or more sets of training data. The method further includes assessing the data using the deep learning model and data obtained from an image quality database to obtain an assessed image quality value and formulating an image quality classification in response to the assessed image quality value. The method additionally includes outputting the image quality classification within a predetermined time period from an initial scan of the region-of-interest.

### SUMMARY OF THE INVENTION

The invention provides for a medical system, a computer program, and a method in the independent claims. Embodiments are given in the dependent claims.

Embodiments may provide a means for determining image attributes more effectively. Various properties of an image such as noise or the resolution of the image may be interrelated. Embodiments determine a noise estimate of a medical image using a neural network referred to herein as an image quantification neural network. After the noise estimate is obtained it is used during the determination of at least one other image attribute using a neural network referred to as an image quantification neural network. The noise estimate is used to control or modify the determination of image attribute. The image attributes and the noise estimate are then used to determine if the image quality satisfy a predetermined criterion or criteria. Depending on image assessment meeting or satisfying the predetermined criterion a warning signal is provided. The warning signal can take different forms in different examples. In some examples a warning signal may comprise a visual warning signal, a audible warning signal, operator instruction, or maintenance instruction may be provided. In other examples, the warning signal may comprise machine commands or modify the functioning of a medical imaging device. Because neural network are used this warning signal can be provided rapidly, even as medical imaging device is acquiring the medical image of a subject.

In one aspect the invention provides for a medical system that comprises a memory that stores machine-executable instructions and multiple neural networks. Both the machine-executable instructions and the multiple neural networks are executable by a computational system. The multiple neural networks comprise a noise estimation neural network and at least one image quantification neural network. The noise estimation neural network is a label to indicate a specific neural network. The label "at least one image quantification neural network" is a label to indicate specific neural networks. Each of the at least one image quantification neural networks is therefore a neural network.

The noise estimation neural network is configured to output a noise estimate of a medical image in response to receiving the medical image as input. That is to say the noise estimation neural network has an input that is configured for receiving a medical image and is able to output a noise estimate. The noise estimate may take different forms in different examples. In one example the noise estimate could be a noise estimate for the entire medical image, in which case it would be a single number. The noise estimate may be for portions or quadrants of the medical image. In yet another example, the noise estimate may be for each pixel or voxel of the medical image, in which case the noise estimate could be a multidimensional mapping of the noise within the medical image.

The noise estimation neural network may therefore be any of the variety of neural networks which are configured for receiving an image. In particular the U-net and ResNet architectures would work particularly well. The noise estimate is an image or image data then a U-net articture, a DeepLab-based architecture, a DnCnn, or a F-Net can, for example, be used. If the noise estimation is a number for the entire image or section of the image a classification neural network may be used. For example, the neural network could be a ResNet, a DenseNet, or VGG net.

The training of the noise estimation neural network to output a noise estimate is provided in more detail below. In short, the noise estimation neural network can be trained by inputting images with a known noise level and then using the resulting noise estimate that is output to compare against this known noise level. For example, images with low or non-existent noise can have noise artificially added to them to provide this training data.

The at least one image quantification neural network is configured to output an image attribute of the medical image in response to receiving the medical image as input. Likewise, the image attribute which is output may be for the entire image, it may be for portions or quadrants of the medical image or it may be a pixel wise or voxel wide map of the image attribute in the medical image. The same neural network architectures mentioned above for the noise estimation neural network may be used for implementing the image quantification neural network also. In particular the U-net and ResNet architectures would work particularly well. The noise estimate is an image or image data then a U-net architecture, a DeepLab-based architecture, a DnCnn, or a F-Net can, for example, be used. If the noise estimation is a number for the entire image or section of the image a classification neural network may be used. For example, the neural network could be a ResNet, a DenseNet, or VGG net.
The image quantification neural networks can be trained by using input images that have a known or artificially added image attribute and then comparing to this known or added image attribute at the output to perform for example deep learning.

The medical system further comprises a computational system. Execution of the machine-executable instructions causes the computational system to receive the medical image. The medical image could be received in a variety of ways, for example it could be transmitted to the computational system via a network or other telecommunications system, the medical image could be retrieved from the memory where it is stored or, if the medical system comprises a medical imaging device such as an MRI or CT system, the medical image could be received by the medical system acquiring the medical image.

Execution of the machine-executable instructions further causes the computational system to receive the noise estimate in response to inputting the medical image into the noise estimation neural network. Execution of the machine-executable instructions further causes the computational system to receive the image attribute in response to inputting the medical image into the image quantification neural network. The determination of the image attribute by the image quantification neural network is dependent upon the noise estimate. As is detailed below, this may have several different possibilities.

In one example the noise estimate is used to select a particular image quantification neural network. For example, various image quantification neural networks may be trained with images which have a particular range of noise within the medical image. In yet other examples, the image quantification neural network could be configured to receive the noise estimate and during the training of the image quantification neural network the known noise of the image that was used for training was also input, in which case the image quantification neural network has been adapted to receive and adjust its response depending upon the noise estimate. In yet other examples, the noise estimate can be used to trigger noise removal from the medical image before it is input into the image quantification neural network. These different possibilities provide a very flexible means of improving the quality of determining the attribute using the image quantification neural network.

In another embodiment execution of the machine-executable instructions further causes the computational system to append the noise estimate and the image attribute from each of the at least one image quantification neural network to an image assessment. Execution of the machine-executable instructions further causes the computational system to provide a warning signal depending upon the image assessment using a predetermined criterion. For example, if the assessment meets the predetermined criterion or criteria then the warning signal may be provided. The warning signal may take different forms in different examples. For example, it could be an audible, visual, or tactile signal that is provided to an operator. In other examples the warning signal may be a signal that is provided to other software modules or executable code to modify the behavior. In other examples, the warning signal may affect the operation of a medical imaging device that for example is used to acquire the medical image either causing a reacquisition or change.

In yet other cases, the warning signal may be used for modifying the behavior of a reconstruction of the medical image. For example, it could trigger the use of an alternate reconstruction method for reconstructing the medical image from the raw medical data acquired by a medical imaging device. The warning signal could also be a display of image assessment or a portion of the image assessment on a display. The warning signal could also be used to label the medical image in a medical database.

The predetermined criterion could take different forms in different examples. For example, it could be used to check to see if values of the image assessment are within a particular range or within a particular statistical range. For example, if one or more of the elements or contents of the image assessment are image data then these images could be processed for average, mean, high and low values and many of these could be used to be the predetermined criterion.

This embodiment may be beneficial because it may provide for an effective means of ensuring that the medical image is reconstructed properly or may be used for adjusting the operation of the medical system and/or the medical image.

In another embodiment the medical system further comprises a medical imaging device, which may also be referred to as a medical imaging device, configured for acquiring medical data descriptive of a subject. Execution of the machine-executable instructions further causes the computational system to control the medical imaging device to acquire the medical data. Execution of the machine-executable instructions further causes the computational system to reconstruct the medical image from the medical data. Execution of the machine-executable instructions further causes the computational system to modify the operation of the medical imaging device if the warning signal is provided. The modification of the operation of the medical imaging device comprises any one of the following: providing a user alert, appending the warning signal to the medical image, generate a medical imaging device repair request, trigger a reacquisition of the medical data, display the resolution estimate, displaying the at least one image attribute, provide operating instruction, provide repair instructions, and combinations thereof.

This embodiment may be particularly beneficial because it may provide for a means of monitoring the medical imaging device on the fly and ensuring that it is operating properly. For example, this could then automatically trigger a service or repair request. This may also be beneficial because it may limit the amount of preventative maintenance which needs to occur. It may also be beneficial because it may eliminate the needs for time consuming tests of the medical imaging device periodically.

An example of this is a magnetic resonance imaging system where noise and resolution estimates are performed on a semi-regular basis using measurements on a phantom to ensure that the magnetic resonance imaging is functioning properly. This embodiment may eliminate or reduce the need for such time-consuming tests.

In another embodiment the medical device is a magnetic resonance imaging system. As mentioned above, this may be beneficial because it may provide for a means of continuously monitoring that the magnetic resonance imaging system is functioning properly without the need to have, or with a reduced need, to perform noise and for example, resolution checks.

In another embodiment the multiple neural networks further comprise a uniformity estimation neural network. The uniformity estimation neural network is configured to output an image uniformity estimation in response to inputting the medical image into the uniformity estimation neural network. The uniformity estimation neural network is a neural network. The uniformity estimation neural network is configured to take the medical image as input and then to output an image uniformity estimation. In the context of magnetic resonance imaging, the image uniformity can change for example, due to improper magnetic shimming. This may result in a change of contrast across the medical image. The uniformity estimation neural network may for example be implemented using the neural network architectures mentioned above for the noise estimation neural network. For training the estimation neural network magnetic resonance images with a known image uniformity may be used as input during training and this known image uniformity may be used as a ground truth data, for example, during the deep learning training of the uniformity estimation neural network.

Execution of the machine-executable instructions further causes the computational system to receive the uniformity estimation response to inputting the medical image into the uniformity estimation neural network. Execution of the machine-executable instructions further causes the computational system to append the uniformity estimation to the image assessment. This for example may be beneficial because it may provide a means of indicating that there is a problem with the magnetic resonance imaging system if the uniformity is outside of certain bounds.

In another embodiment the uniformity estimation is received before inputting the medical image into the noise estimation neural network. Execution of the machine-executable instructions further causes the computational system to, in one option; apply an image uniformity correction algorithm to the medical image before inputting the medical image into the noise estimation neural network. The image uniformity correction algorithm is controlled by the uniformity estimation. For example, the contrast of the medical image can be adjusted using an algorithmic image uniformity correction algorithm. As an alternate option or in conjunction with the first option, Execution of the machine-executable instructions further causes the computational system to trigger a reacquisition of the medical image data if the uniformity estimation meets a predetermined uniformity criterion.

As a further option it may be performed alone or in conjunction with the first two options, execution of the machine-executable instructions further causes the computational system to request a magnetic shim readjustment of a magnet of the magnetic resonance imaging system if it matches the predetermined uniformity criterion. These various options may be beneficial because they provide for a means of improving the uniformity of the medical image. In particular this may be beneficial to perform this before performing the noise estimation as this may make the noise estimation and determination of other image attributes more accurate.

In another embodiment the multiple neural networks further comprise a magnetic resonance weighting estimation neural network. The magnetic resonance weighting estimation neural network is configured to estimate a magnetic resonance weighting dependency in response to receiving the medical image as input. The magnetic resonance weighting estimation neural network as used herein, encompasses a neural network that is configured for receiving an image and configured for outputting a magnetic resonance weighting estimation. The weighting in this respect refers to the contrast type or type of weighting for the magnetic resonance imaging. For example, this may be a T1, T2, T2-star, diffusion weighting or other type of weighting for the magnetic resonance image. As was mentioned, this may be trained by taking magnetic resonance images with a known image weighting type and then using this as the input and ground truth data for a training of the magnetic resonance weighting estimation neural network using for example deep learning.

As was true for the noise estimation neural network, the magnetic resonance weighting estimation neural network may also be any of the variety of neural networks which are configured for receiving an image. In particular the U-net and ResNet architectures would work particularly well. The noise estimate is an image or image data then a U-net architecture, a DeepLab-based architecture, a DnCnn, or a F-Net can, for example, be used. If the noise estimation is a number for the entire image or section of the image a classification neural network may be used. For example, the neural network could be a ResNet, a DenseNet, or VGG net.

Execution of the machine-executable instructions further causes the computational system to receive the magnetic resonance weighting dependency in response to inputting the medical image into the magnetic resonance weighting estimation neural network and to append the magnetic resonance weighting dependency to the image assessment. In some examples the determination of the magnetic resonance weighting dependency is performed after an image uniformity correction is performed and/or before a noise estimation or correction is performed.

In another embodiment the medical imaging device is a tomographic medical imaging device.

In another embodiment the medical imaging device is a computed tomography system.

In another embodiment the medical imaging device is a C-arm computed tomography system. A C-arm computed tomography system is typically a portable computed tomography system with a detector and X-ray source that are mounted on a C-shaped arm.

In another embodiment the medical imaging device is a planar X-ray system.

In another embodiment the medical imaging device is a fluoroscopy system or digital fluoroscopy system.

In another embodiment the medical imaging device is a positron emission tomography system.

In another embodiment the medical imaging device is a single-photon emission tomography system.

In another embodiment the medical imaging device is an ultrasound system.

In another embodiment execution of the machine-executable instructions further causes the computational system to apply a noise removal algorithm to the medical image after receiving the noise estimate and before inputting the medical image into the at least one image quantification neural network. This embodiment may be beneficial because it may enable the image quantification neural network to perform more accurately.

In another embodiment the at least one image quantification neural network is further configured to receive the noise estimate as an input. Execution of the machine-executable instructions further causes the computational system to input the noise estimate into the image quantification neural network before receiving the image attribute. This embodiment may be beneficial because it may provide for a means of determining the image quantification more accurately. (Note to self: insert standard text describing how to put multiple inputs into a neural network here)

In another embodiment each of the at least one image quantification neural network is selected from a group of image attribute-specific image quantification neural networks using the noise estimate. In this embodiment, for each individual image quantification there is a group or pool of image quantification neural networks, which have been trained using different amounts of noise to therefore get an accurate value of the image quantification once the noise estimate is used to select the appropriate image quantification neural network from the image attribute-specific image quantification neural networks.

In another embodiment the at least one image quantification neural network comprises a resolution estimation neural network configured to output a resolution estimate of the medical image in response to receiving the medical image as input. This embodiment may be beneficial because the resolution estimate may be much more accurate after the noise estimate is accounted for. The training and neural network architecture details described previously for the image quantification neural network are applicable to the resolution estimation neural network. Images with a known resolution (or known spatially dependent resolution) may be used for training.

In another embodiment the at least one image quantification neural network comprises an artifact estimation neural network configured to output an image artifact quantification in the medical image in response to receiving the medical image as input. For example, the artifact estimation neural network may provide a location of artifacts within the magnetic resonance image or may indicate regions which are likely to contain an image artifact. This may be beneficial because it may also be more accurate after the noise estimate has been accounted for. The training and neural network architecture details described previously for the image quantification neural network are applicable to the resolution estimation neural network. Images with a known know levels of artifacts or motion artifacts may be used for training. In the case where the output is an identification of artifact locations, labeled images with the location of artifacts labeled may be used for training.

The resolution estimation neural network could be trained by taking an image with a known resolution and then using this as the input and the known resolution as the ground truth during training. Likewise, the artifact estimation neural network can be trained by using magnetic resonance images that have known artifacts within them and then using this knowledge about the artifacts as the ground truth to perform the training.

In another embodiment the memory further comprises a foreign object detection neural network. The foreign object detection neural network is configured to output a foreign object segmentation in the medical image in response to inputting the medical image. Each of the multiple neural networks is further configured to receive an object mask to identify a region to ignore in the medical image. Execution of the machine-executable instructions further causes the computational system to receive the foreign object segmentation in response to inputting the medical image into the foreign object detection neural network. Execution of the machine-executable instructions further causes the computational system to construct the image mask from the foreign object segmentation. Execution of the machine-executable instructions further causes the computational system to input the image mask into each of the multiple neural networks.

For example, the foreign object detection neural network may be a convolutional neural network that is trained to locate objects within the image. This is a very classical and typical use of convolutional neural networks. They may be trained by providing medical images which have foreign objects labeled within them. The labeled images may then be used to train the neural network by performing deep learning on the foreign object detection neural network. The following are example neural network architectures which may be used: a U-net architecture, a DeepLab-based architecture, a DnCnn, or a F-Net can, for example, be used.

The multiple neural networks can be trained such that they also receive an image mask with a portion of the image to ignore. In this way the noise and other image attributes can be determined without them being affected by foreign objects.

In another embodiment the memory further contains an evaluation neural network configured to output the warning signal if the image assessment meets a predetermined criterion. Execution of the machine-executable instructions further causes the computational system to input the image assessment into the evaluation neural network and to receive the warning signal if the predetermined criterion is met. In some examples the predetermined criterion may be determined by using lookup tables or ranges, which are acceptable for the noise estimate and the various image quantifications. In this embodiment a neural network can be trained to receive the image assessment and then to provide the warning signal if the values of the image assessment are not acceptable. This can be trained for example, by taking various combinations of image assessments from actual measurements and then assigning them as being either acceptable or not acceptable. The values can be put into the neural network and then the decision if they should cause a warning or not can be used as the ground truth. The evaluation neural network may for example be implemented using standard neural networks used for performing classification tasks such as a ResNet, a DenseNet, an or VGG net.

In another aspect the invention provides for a computer program that comprises machine-executable instructions and multiple neural networks for execution by a computational system. The multiple neural networks comprise a noise estimation neural network and at least one image quantification neural network. The noise estimation neural network is configured to output a noise estimate of a medical image in response to receiving the medical image as input. The at least one image quantification neural network is configured to output an image attribute of the medical image in response to receiving the medical image as input. Execution of the machine-executable instructions causes the computational system to receive the medical image.

Execution of the machine-executable instructions further causes the computational system to receive the noise estimate in response to inputting the medical image into the noise estimation neural network. Execution of the machine-executable instructions further causes the computational system to receive the image attribute in response to inputting the medical image into the image quantification neural network. Determination of the image attribute by the image quantification neural network is dependent upon the noise estimate. Execution of the machine-executable instructions further causes the computational system to append the noise estimate and the image attribute from each of the at least one image quantification neural network to an image assessment. Execution of the machine-executable instructions further causes the computational system to provide a warning signal depending on the image assessment meeting a predetermined criterion.

In another aspect, the invention provides for a method of training a noise estimation neural network. The method comprises receiving an untrained noise estimation neural network. The method further comprises receiving training data. The training data comprises pairs of input images and ground truth noise values. At least a portion of the pairs of the input images are modified optical images. The modified optical images are generated by adding noise to optical images and applying an image mask to black out portions of the optical images. For example, when performing magnetic resonance imaging, large portions of the image are dark or black. The noise estimation neural network can be trained such that it ignores these dark or black regions of the magnetic resonance image. Typically, normal optical images, such as would be acquired by an optical camera, could not be used to train a neural network that would estimate the noise of a magnetic resonance image or other medical image for the reason that there are these regions which are dark or don't contain any information. An optical image as used herein encompasses an image acquired using an optical camera. An optical image may also be referred to a natural image or a photograph (or digital photograph).

The image mask does not need to be binary, wherein portions of the image are completely blacked out. To mimic the signal drop-off in a magnetic resonance image at the transition between a portion depicting anatomy and its mostly dark background, one can use a smoothed mask instead of a binary mask. There is a gradual transition between the image and the background instead of an abrupt or binary transition. For example, one may take a normal binary mask and smooth it with a gaussian kernel. When multiplying the natural image with the smoothed mask, one can achieve a similar signal drop-off at the mask borders. This may provide for neural networks that function more reliably. In this example, the image mask may comprise a subject portion which simulates the subject in the medical image and a background portion which simulates the darkened portion of medical image. In this example there is then a smooth transition between the subject portion and the background portion.

However, the use of these optical images can be used for training these neural networks by applying an image mask in addition to putting a controlled amount of noise into these images. This is extremely advantageous because it enables the ability to generate large amounts of training data so that the noise estimation neural network functions much better than if it had been trained using magnetic resonance images. In addition, modifying these optical images by adding noise enables a very precise training of the neural network. If natural magnetic resonance images were used, there is interplay between noise and the resolution. It may be very difficult to accurately train the noise estimation neural network using just magnetic resonance images.

It is understood that one or more of the aforementioned embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the computational system. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a computational system. 'Computer storage' or 'storage' is a further example of a computer-readable storage medium. Computer storage is any non-volatile computer-readable storage medium. In some embodiments computer storage may also be computer memory or vice versa.

A 'computational system' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a computational system of a general-purpose computer, special purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A 'hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include, but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or 'display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen,

Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

A medical data is defined herein as being recorded measurements made by a medical imaging device which is descriptive of a subject. The medical imaging data may be reconstructed into a medical image. A medical image is defined herein as being the reconstructed two- or three-dimensional visualization of anatomic data contained within the medical data. This visualization can be performed using a computer.

K-space data is defined herein as being the recorded measurements of radio frequency signals emitted by atomic spins using the antenna of a Magnetic resonance apparatus during a magnetic resonance imaging scan. Magnetic resonance data is an example of medical data.

A Magnetic Resonance Imaging (MRI) image or MR image is defined herein as being the reconstructed two- or three-dimensional visualization of anatomic data contained within the k-space data. This visualization can be performed using a computer.

### BRIEF DESCRIPTION OF THE DRAWINGS

In the following preferred embodiments of the invention will be described, by way of example only, and with reference to the drawings in which:
Fig. 1 illustrates an example of a medical system;
Fig. 2 shows a flow chart which illustrates a method of using the medical system of Fig. 1;
Fig. 3 illustrates an example of a medical system;
Fig. 4 shows a flow chart which illustrates a method of using the medical system of Fig. 3;
Fig. 5 illustrates an example of how the various neural networks of the medical system can be arranged cooperatively;
Fig. 6 illustrates a further example of how the various neural networks of the medical system can be arranged cooperatively;
Fig. 7 illustrates a further example of how the various neural networks of the medical system can be arranged cooperatively;
Fig. 8 illustrates a further neural network that can be used to identify foreign objects in the medical image;
Fig. 9 illustrates optical images that may be used for training neural networks to determine noise levels or resolution in medical images;
Fig. 10 illustrates further optical images that may be used for training neural networks to determine noise levels or resolution in medical images;
Fig. 11 illustrates a method of training neural networks; and
Fig. 12 illustrates a neural network topology suitable to output a single numerical value such as a signal to noise level or a resolution of the image.

### DESCRIPTION OF EMBODIMENTS

Like numbered elements in these figures are either equivalent elements or perform the same function. Elements which have been discussed previously will not necessarily be discussed in later figures if the function is equivalent.

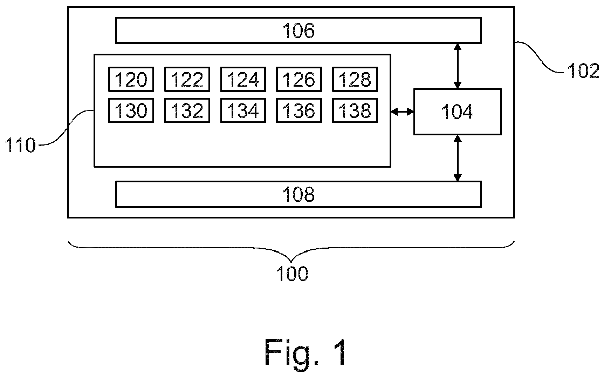

Fig. 1 illustrates an example of the medical system. The medical system 100 is shown as comprising a computer 102 that has a computational system 104. The computer 102 may for example represent one or more networked computers. Likewise, the computational system 104 may represent one or more computational systems such as multiple processors or multiple cores that work cooperatively. The computational system 104 is shown as being connected to an optional hardware interface 106 and an optional user interface 108. The hardware interface 106 may for example enable the computational system 104 to communicate and control other components of the medical system 100. For example, if the medical system 100 further comprises a medical imaging device.

The computational system 104 is further shown as being in communication with a memory 110. The memory 110 is intended to represent different types of memory or storage which is accessible to the computational system 104. The memory 110 is shown as containing machine-executable instructions 120. The machine-executable instructions 120 enable the computational system 104 to perform basic computational and image processing tasks. The memory 110 is further shown as containing a noise estimation neural network 122. The memory is further shown as containing image quantification neural network 124.

The memory is further shown as containing a medical image 126. The memory 110 is further shown as containing a noise estimate. The noise estimate 128 is obtained by inputting the medical image into the noise estimation neural network 122 and receiving the noise estimate 128 as an output. The memory is further shown as containing an image attribute 130. The image attribute 130 is obtained by inputting the medical image 126 and/or the noise estimate 128 into the image quantification neural network 124 and in response receiving the image attribute 130. The noise estimate 128 is used to control how the image quantification neural network 124 provides the image attribute 130. This can be done in a variety of different ways. In one case, there are multiple image quantification neural networks 124 for a given image attribute, and they have been trained using different amounts of noise. The noise estimate 128 can then be used to select the proper image quantification neural network 122 to use for a particular value of the noise estimate 128.

In other variants the image quantification neural network 124 is trained using a known noise during the training process. In this case the noise estimate 120 is input directly into the image quantification neural network 124. In other examples, there may be an image filter which is controlled using the noise estimate 128. For example, the medical image is first input into the noise estimation neural network 122 and then the resulting noise estimate 128 is used to control the image filter. The filter image is then input into the image quantification neural network 124.

The memory 132 is further shown as containing an image assessment 132. The image assessment 132 is a collection of the noise estimate 128 and any image attributes 130 that have been determined. The memory is further shown as containing a predetermined criterion 136 which is then used to determine if the image assessment 132 is within acceptable bounds or not. For example, the predetermined criterion 136 may be used to determine if the medical imaging device used to acquire the medical image 126 is functioning properly or not. This may be done in a variety of ways. In one example there may be a decision module 134 that compares the predetermined criterion 136 to the image assessment 132. This may essentially be equivalent to a lookup table or comparing the values within the image assessment 132 to a variety of ranges or bounds. The decision module 134 could then provide a signal 138 if the image assessment does not meet the predetermined criteria. Alternatively, the decision module 134 could be an evaluation neural network which is trained to receive the image assessment 132 and then provide the signal 138 if the predetermined criterion is not met.

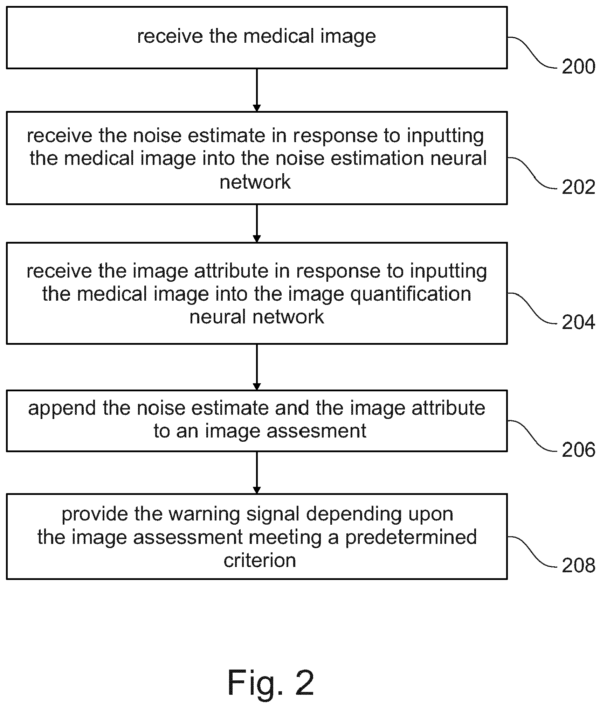

Fig. 2 shows a flowchart which illustrates a method of operating the medical system of Fig. 1. First, in step 200, the medical image 126 is received. Next, in step 202, the noise estimate 128 is received in response to inputting the medical image 126 into the noise estimation neural network 122. Then, in step 204, the image attribute 130 is received in response to inputting the medical image 126 into the image quantification neural network 124. As was noted before, the determination of the image attribute by the image quantification neural network is dependent upon the noise estimate 128. Then, in step 206, the noise estimate and the image attributes 130 are appended to an image assessment 132. Finally, in step 208, the warning signal 138 is provided depending on the image assessment meeting a predetermined criterion 136.

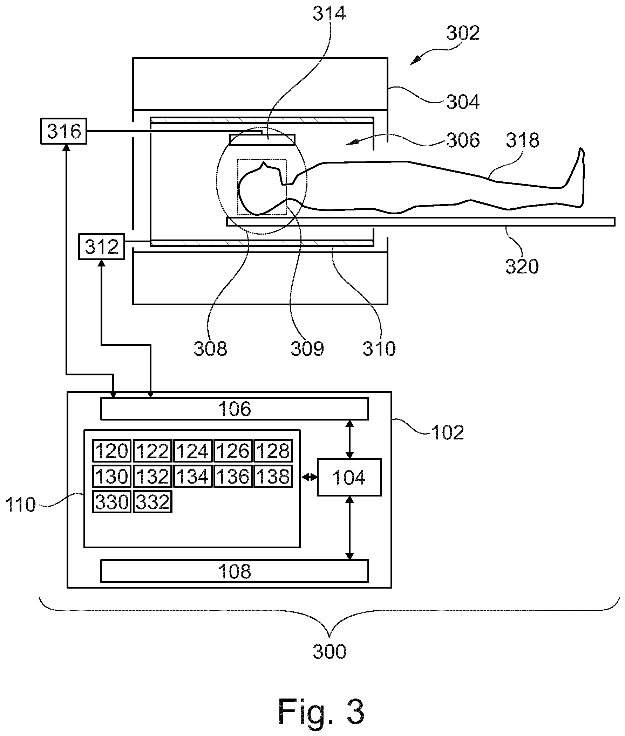

Fig. 3 illustrates a further example of a medical system 300. Embodiments of the invention may be used with a variety of different medical imaging devices. The magnetic resonance imaging system 302 is intended as an example. The medical system 300 in Fig. 3 is similar to the medical system 100 in Fig. 1 except it additionally comprises the magnetic resonance imaging system 302.

The example illustrated in Fig. 3 is a magnetic resonance imaging system 302. However, the magnetic resonance imaging system could be replaced with other types of tomographic medical imaging devices. An example could be a computed tomography system, a C-arm computed tomography system, a single photon emission tomography system, a positron emission tomography system, a fluoroscopy system, an x-ray system, or an ultrasound system.

The magnetic resonance imaging system 302 comprises a magnet 304. The magnet 304 is a superconducting cylindrical type magnet with a bore 306 through it. The use of different types of magnets is also possible; for instance it is also possible to use both a split cylindrical magnet and a so called open magnet. A split cylindrical magnet is similar to a standard cylindrical magnet, except that the cryostat has been split into two sections to allow access to the iso-plane of the magnet, such magnets may for instance be used in conjunction with charged particle beam therapy. An open magnet has two magnet sections, one above the other with a space in-between that is large enough to receive a subject: the arrangement of the two sections area similar to that of a Helmholtz coil. Open magnets are popular, because the subject is less confined. Inside the cryostat of the cylindrical magnet there is a collection of superconducting coils.

Within the bore 306 of the cylindrical magnet 304 there is an imaging zone 308 where the magnetic field is strong and uniform enough to perform magnetic resonance imaging. A field of view 309 is shown within the imaging zone 308. The magnetic resonance data that is typically acquired for the field of view 309. The region of interest could be identical with the field of view 309 or it could be a sub volume of the field of view 309. A subject 318 is shown as being supported by a subject support 320 such that at least a portion of the subject 318 is within the imaging zone 308 and the field of view 309.

Within the bore 306 of the magnet there is also a set of magnetic field gradient coils 310 which is used for acquisition of preliminary magnetic resonance data to spatially encode magnetic spins within the imaging zone 308 of the magnet 304. The magnetic field gradient coils 310 connected to a magnetic field gradient coil power supply 312. The magnetic field gradient coils 310 are intended to be representative. Typically, magnetic field gradient coils 310 contain three separate sets of coils for spatially encoding in three orthogonal spatial directions. A magnetic field gradient power supply supplies current to the magnetic field gradient coils. The current supplied to the magnetic field gradient coils 310 is controlled as a function of time and may be ramped or pulsed.

Adjacent to the imaging zone 308 is a radio-frequency coil 314 for manipulating the orientations of magnetic spins within the imaging zone 308 and for receiving radio transmissions from spins also within the imaging zone 308. The radio frequency antenna may contain multiple coil elements. The radio frequency antenna may also be referred to as a channel or antenna. The radio-frequency coil 314 is connected to a radio frequency transceiver 316. The radio-frequency coil 314 and radio frequency transceiver 316 may be replaced by separate transmit and receive coils and a separate transmitter and receiver. It is understood that the radio-frequency coil 314 and the radio frequency transceiver 316 are representative. The radio-frequency coil 314 is intended to also represent a dedicated transmit antenna and a dedicated receive antenna. Likewise, the transceiver 316 may also represent a separate transmitter and receivers. The radio-frequency coil 314 may also have multiple receive/transmit elements and the radio frequency transceiver 316 may have multiple receive/transmit channels.

The transceiver 316 and the gradient controller 312 are shown as being connected to the hardware interface 106 of the computer system 102.

The memory 110 is further shown as containing pulse sequence commands 330. The pulse sequence commands are either commands or data which may be converted into commands, which the computational system 104 uses to control the magnetic resonance imaging system to acquire k-space data. The memory 110 is shown as containing k-space data 332 that has been acquired by the magnetic resonance imaging system for the field of view 309. The medical image in this example, 126, is a magnetic resonance image. The medical image 126 was reconstructed from the k-space data 332.

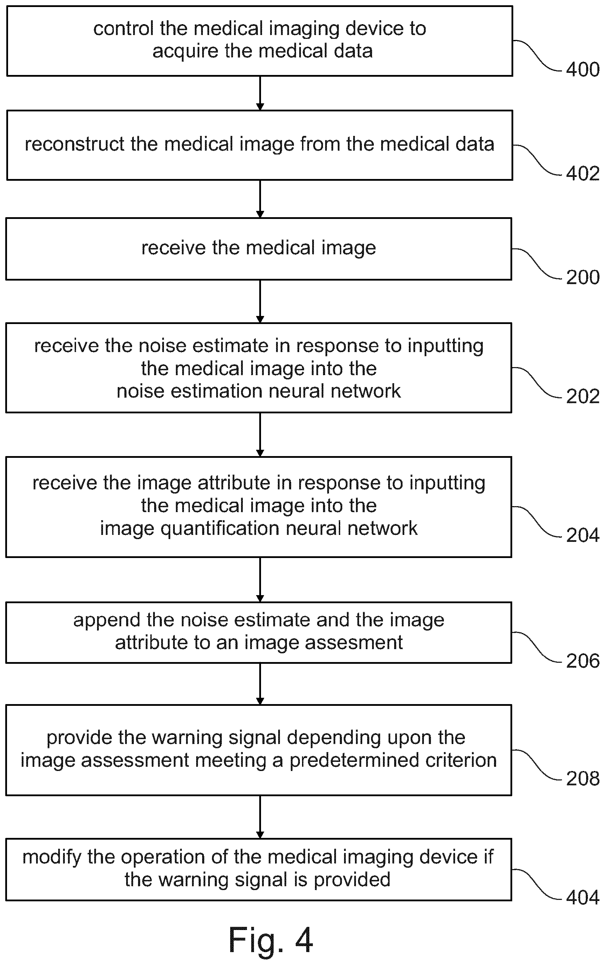

Fig. 4 shows a flowchart which illustrates a method of operating the medical system 300 of Fig. 3. First, in step 400, the medical imaging device, or in this case the magnetic resonance imaging system 302, is controlled to acquire medical data. In this example, the medical data is the k-space data 332. Next, in step 402, the medical image 126 is reconstructed from the medical data 332. The method after step 302 then proceeds and performs steps 200, 202, 204, 206, and 208 as was illustrated in Fig. 2. After step 208 is performed step 404 is performed. In step 404 the operation of the medical imaging device 302 is modified if the warning signal 138 is provided. A particularly useful example is when the image attribute 130 comprises a resolution estimate. The combination of the resolution estimate and the noise estimate may be useful in determining if the magnetic resonance imaging system is functioning correctly. The method illustrated in Fig. 4 could for example be performed repeatedly after each image acquisition. For example, if both of these are out of bounds then it may indicate that a shimming operation or adjustment of magnetic resonance imaging system's magnetic shims needs to be adjusted.

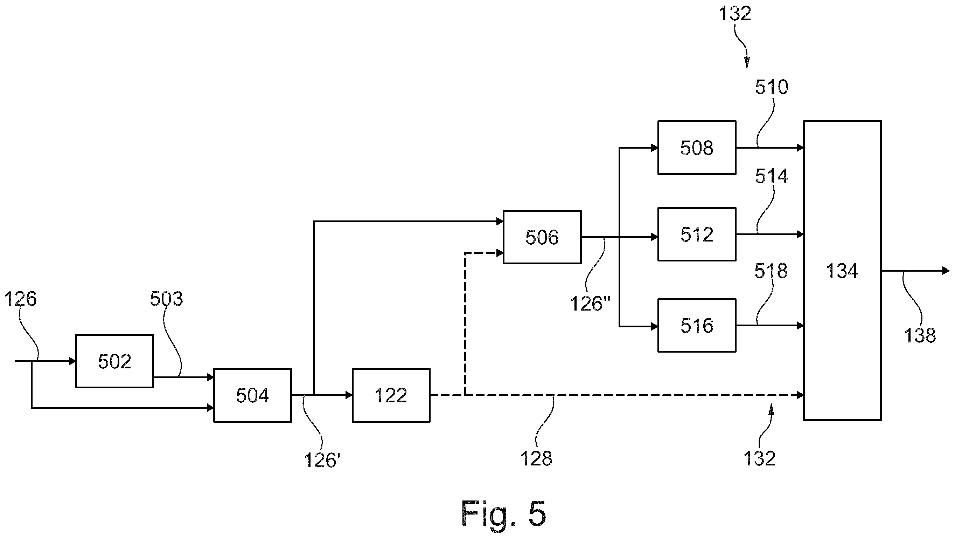

Fig. 5 illustrates one example of how the various neural networks of the medical system can be arranged cooperatively. First, the medical image 126 is optionally inserted or input into a uniformity estimation neural network 502. This returns an image uniformity estimate 503. This may then be optionally input into an image uniformity correction algorithm 504. In this example, the image uniformity correction algorithm 504 receives the image uniformity estimate 503 and the medical image 126 as input; it then outputs a medical image 126' that has its uniformity corrected. Next, the uniformity corrected medical image 126' is input into the noise estimation neural network 122. Optionally, if the uniformity estimation neural network 502 and the image uniformity correction algorithm 504 are not present, then the medical image 126 is input directly into the noise estimation neural network 122.

The noise estimation neural network 122 then outputs the noise estimate 128. The medical image 126' and the noise estimate 128 are then input into a noise filter 506. The noise estimate 128 is used to control the function of the noise filter 506.

The noise filter 506 then outputs a filtered medical image 126" that has its noise reduced by the noise filter 506. These are input into a variety of other neural networks. The filtered medical image 126" is shown as being input into an optional magnetic resonance weighting estimation neural network 508 that returns a magnetic resonance weighting dependency 510. This for example identifies the type of magnetic resonance weighting such as T1 or T2, or T2-star weighting. Two examples of image quantification neural networks 124 are also shown. In this example we have a resolution estimation neural network 512 and an artifact estimation neural network 516. The filtered medical image 126" is input into the resolution estimation neural network 512 and in response a resolution estimate 514 is output. The filtered medical image 126" is then input into the artifact estimation neural network 516 and an image artifact quantification 518 is returned. This could either be a segmentation or mask which identifies the location of artifacts or provides a measure such as the number of voxels which likely contain an image artifact.

The noise estimate, the resolution estimate, and the image artifact quantification 518 are input into a decision module 134. The magnetic resonance weighting dependency 510 may also optionally be input into the decision module 134. The decision module 134 then decides if the medical image 126 meets a predetermined criterion 136 or not. This could be looking at or providing various value bounds for the values in the image assessment 132 or by implementing the decision module 134 as trained neural network. The image assessment 132 is not shown directly but would be a combination of the values 128, 510, 514, and 518.

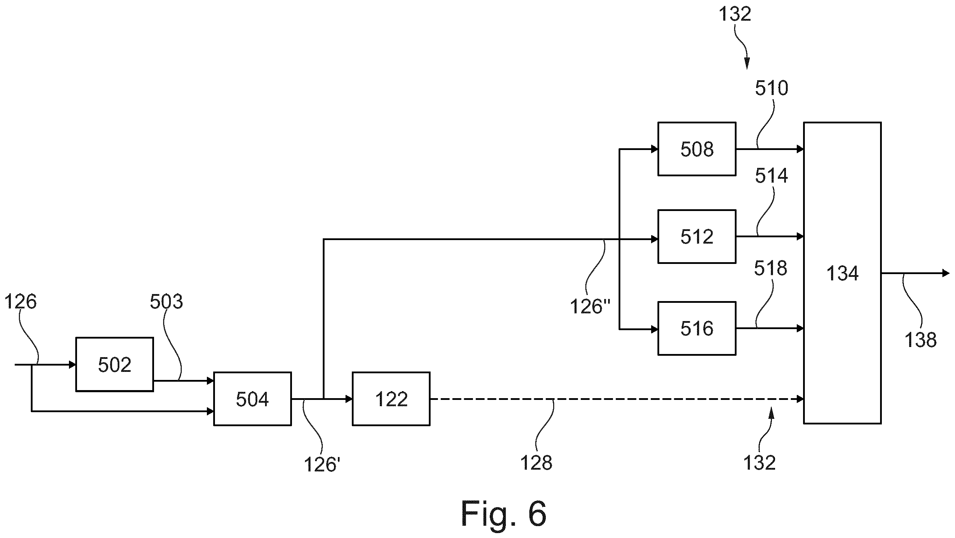

Fig. 6 illustrates a further way in which the neural networks of the medical system can be combined cooperatively. In this example, the noise estimate 128 is used to select the magnetic resonance weighting estimation neural network 508, the resolution estimate neural network 512, and the artifact estimation neural network 516. In essence, these neural networks have been tailored to function properly for a particular range of the noise estimate 128. As such, it can be seen that for these neural networks the uniformity corrected medical image 126' is input directly into them. If the optional uniformity estimation neural network 502 and image uniformity correction algorithm 504 are not present, then the medical image 126 is directly input into the magnetic resonance weighting estimation neural network 508, the resolution estimation neural network 512, and the artifact estimation neural network 516.

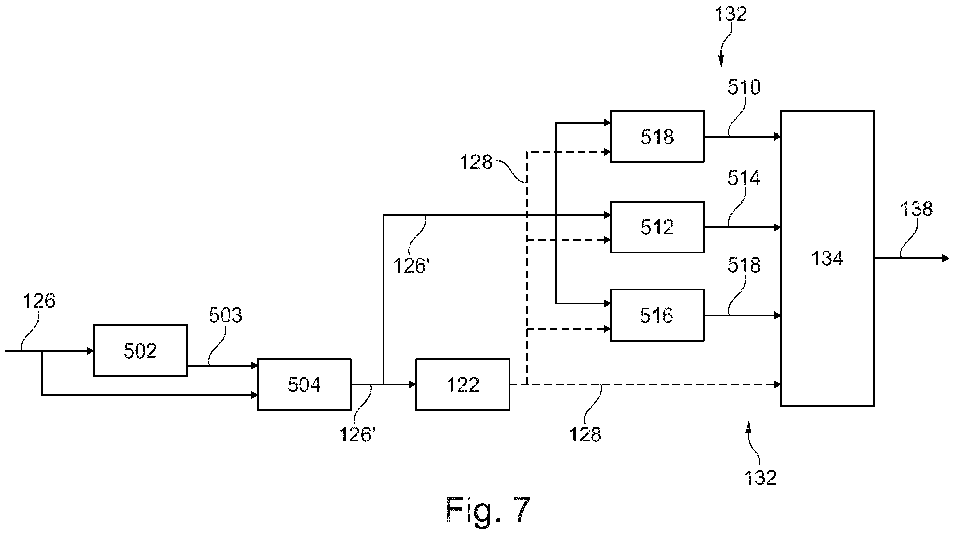

Fig. 7 shows another alternative way in which the neural networks of the medical system can be used cooperatively. In this example, the magnetic resonance weighting estimation neural network 508, the resolution estimation neural network 512, and the artifact estimation neural network 516 have been trained to accept the noise estimate 128 as input in addition to receiving the medical image 126 or 126'. By training these neural networks 508, 512, and 516 with a variety of noise levels, the neural networks 508, 512, 516 can provide their output values 510, 514, 518 correctly when the noise estimate 128 is provided.

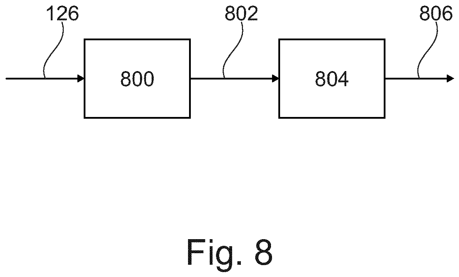

Fig. 8 illustrates a further neural network that can be used to identify foreign objects such as pacemakers, metal bits, or other structures which are not part of the subject and which would cause an error in determination of the warning signal. The medical image 126 is shown as being input into a foreign object identification neural network 800. This may be a standard convolutional neural network that is used for image segmentation and identifying objects in images. The foreign object identification neural network 800 then outputs a foreign object segmentation 802, which then goes into a mask construction module 804. The mask construction module 804 may for example be used to identify different parts or compartments of the foreign object segmentation 802 and construct an image mask 806 which identifies the region of the medical image 126 that contains the foreign object. The image mask 806 may then be provided to an additional input to any or all of the neural networks illustrated in Figs. 5, 6, and 7. In this case, these neural networks which receive the image mask 806 have been, during their training, trained to ignore regions indicated by the image mask 806 as containing foreign objects. The technical result is that the neural networks in Figs. 5, 6, and 7 then ignore the region of the image mask when preparing the image assessment 132.

Image quality is a crucial aspect for Magnetic Resonance Imaging (MRI), and other imaging modalities, as it has a substantial impact on radiologists' assessment of the medical scans. High image quality is characterized, e.g., by a high signal-to-noise ratio (SNR) and high resolution.
Image quality can be impaired by a wide range of factors and it is crucial to identify those factors, since harming the patient by diagnosing him based on low-quality, potentially even flawed images must be avoided at all costs. An evaluation of (overall) image quality is traditionally performed by employing phantom scans and the analysis of the phantom images regarding different quality parameters. For MRI, this can be very time- and resource-consuming and is not feasible on a day-to-day basis.

Examples may address this problem with a combination of several deep learning models (neural networks) that each evaluate a certain image quality parameter such as, e.g., resolution and SNR. A key advantage of this technique is that image quality can be monitored in real-time and that our method can thus notify the user in case of potential issues impairing image quality, which can then be directly addressed.

Maintaining the highest possible standards for image quality in MRI is crucial for diagnostic confidence, as well as to allow for, e.g., multi-center studies. However, there are several factors that can lead to decreased image quality, such as inadequate or suboptimal scan parameters, patient motion, system wear and tear, and technical defects within the MRI scanner. One way to detect a decrease in image quality caused by inadequate scan parameters, system degradation, or technical defects is to continually monitor the reconstructed images regarding image quality parameters and to notify the user in real-time as soon as image quality is impaired for some reason. Also, quality assurance is an important preparatory step before using a system, after it has been installed on site.

The traditional way to investigate the overall quality characteristics of an MRI scanner is by employing phantom measurements and semi-automatically evaluate the phantom images towards image quality parameters such as spatial resolution, signal-to-noise ratio (SNR), and image uniformity. However, this approach is very time- and resource-consuming. This may be acceptable when initially setting up a system but is not feasible for monitoring image quality on a day-to-day basis.

Examples may overcome the need for phantom measurements with a series of specific neural networks (NN) that are trained to analyze the reconstructed images and determine a wide range of image quality parameters such as resolution, SNR, and image uniformity, and thus allow to assess the overall quality of the reconstructed image. Based on this assessment, the system can then notify the user in case it detects a deterioration in image quality for some reason. This tool can continuously run in a fully automatic way, allowing to monitor image quality, for example in real-time.

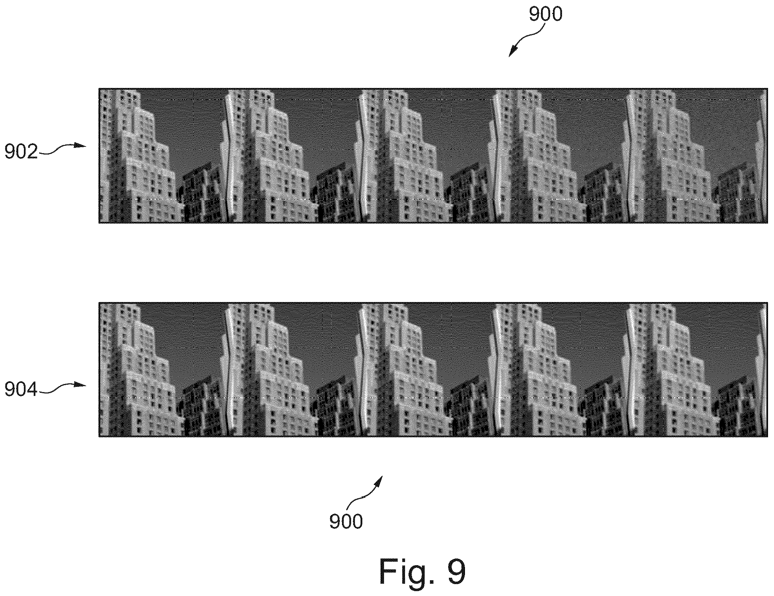

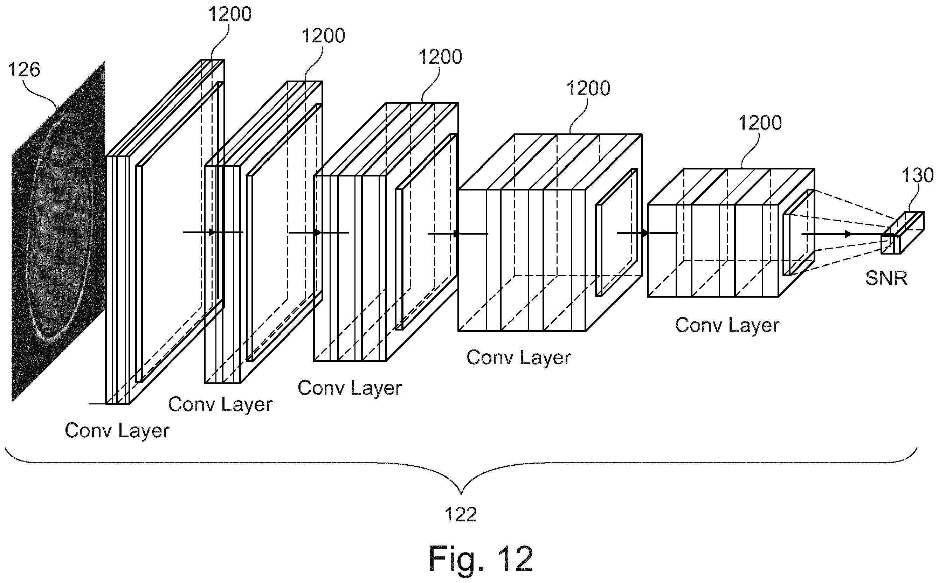

Examples may train image-based NNs to directly estimate respective quality parameters on reconstructed images. These parameters can be image resolution and SNR, but also other parameters like image uniformity. The NNs can be trained on real MR images, but high-resolution low-noise photos (optical images as from a camera) can also be used as training data. When using natural photos for training, it is crucial to use the right statistical noise model when simulating different SNR levels. To train the NNs, data sets are used an input containing images with varying resolution and SNR, respectively, as shown in Fig. 9 below. A typical network topology for such task is depicted in Fig. 12 below.

Fig. 9 shows a variety of training images 900. In the top row 902 the training images show a varying noise level (signal-to-noise ratio). In the bottom row 904 the images show a varying resolution. Although these are non-medical images, they may still be used for training the noise estimation neural network 122 and the resolution estimation neural network 512. Image quality is artificially degraded further from left to right. Examples may train a neural network on such natural images or optical images to be able to monitor MR image quality on-the-fly in clinical practice.

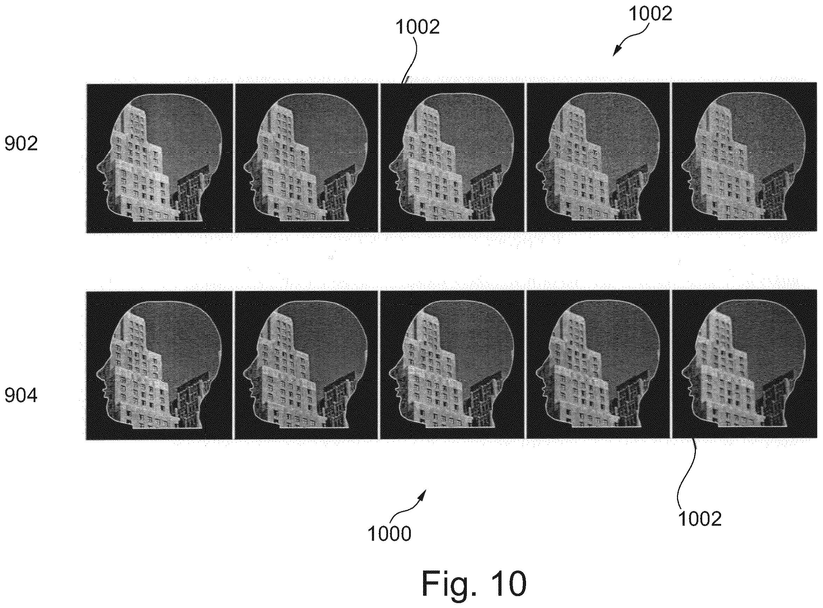

Fig. 10 shows the same training images 1000 with image masks 1002 added. A portion of these images is now blacked out. However, the shape and the amount of the image simulates what would be present in a magnetic resonance image. This helps the neural networks to be better adapted for examining magnetic resonance images during training. The optical images and the image masks 1000 can be varied. This is a very inexpensive and easy way of providing training data for training the image quantification neural network 124 or the noise estimation neural network 122.

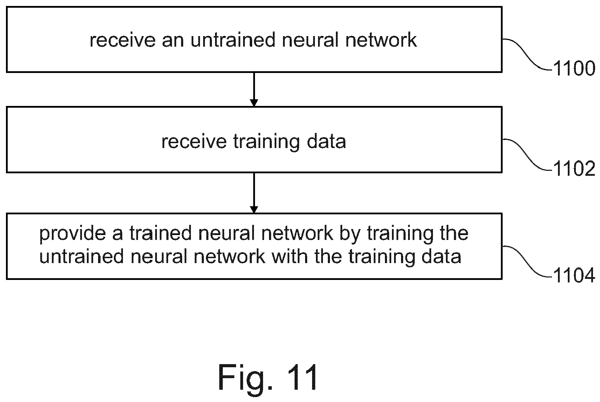

Fig. 11 illustrates a method of using the training images 900 with the image masks 1000. First, in step 1100, an untrained neural network is received. Next, in step 1102, the training data is received. It may include natural images or optical images where the known noise level or resolution corresponding (or other image attribute) is known. At least a portion of the pairs of input images in some examples are modified optical images with image masks such as is illustrated in Fig. 10. The modified optical images 1000 are generated by adding noise or other transformations to adjust, for example, the resolution, to optical images and applying an image mask 1002 to black out portions of the optical images.

Fig. 12 illustrates an exemplary neural network architecture for the noise estimation neural network 122. The medical image 126 is shown as being input into a convolutional layer 1200. There are a number of convolutional layers that are stacked sequentially. The final convolutional layer 1200 outputs the signal-to-noise ratio 130. A similar neural network may also be used for the image quantification neural network 124.

Once the NNs are trained, they will be able to estimate the resolution and SNR of any given MRI (or other modality) scan. Due to their short runtime, the NNs can be continuously used on the system to evaluate the image quality of every reconstructed image and can notify the user as soon as abnormalities regarding any of the monitored parameters are detected. In addition to the NNs quantifying image quality, we envision another AI-based algorithm which analyzes the output of the NNs and determines whether the quality is impaired by inadequate scan parameters or a technical defect.

As regards the image-based measurement of SNR, as an alternative to training a CNN to directly determine the noise level, it is also possible to acquire a series of images with potentially low SNR, and apply CNN-based AI denoising algorithm to these images. In a well-calibrated system, the pixel-based variance between the denoised images as well as the average distance to the ground truth (acquired in a longer scan) should both be minimal. This may be employed as a quality test before using the system, after it has been installed at the site.

The approach can also be used in an on-system learning fashion. Whenever a network detects degraded quality, the user can accept or reject the finding (or corrective actions can be measured) and thus the network receives additional training data t better adapt to real degradations.
As an additional embodiment of our invention, we envision NNs to be trained to quantify the contrast (i.e., the dependency on T1, T2, diffusion, etc.) in an image-based manner as well.

The presented examples may enable monitoring image quality in real-time is very versatile and can be used with all MRI scanners, but can also be transferred to, e.g., CT scanners or cone beam CT systems (IGT, RT) or Ultrasound devices (virtually all imaging systems). More specifically it can already be applied to projection data prior to reconstruction (CT). It makes repeated scans and a costly troubleshooting process through phantom measurements obsolete and ensures the highest possible image quality at any given time. It can also be used for automatic alerts (service). In addition, it can be used for marketing purposes to compare for example the image quality of reconstructed images from different manufacturers.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### REFERENCE SIGNS LIST

- 100: medical system
- 102: computer
- 104: computational system
- 106: hardware interface
- 108: user interface
- 110: memory
- 120: machine executable instructions
- 122: noise estimation neural network
- 124: image quantification neural network
- 126: medical image
- 126': uniformity corrected medical image
- 126": filtered medical image
- 128: noise estimate
- 130: image attribute
- 132: image assessment
- 134: decision module
- 136: predetermined criterion
- 138: warning signal
- 200: receive the medical image;
- 202: receive the noise estimate in response to inputting the medical image into the noise estimation neural network
- 204: receive the image attribute in response to inputting the medical image into the image quantification neural network.
- 206: append the resolution estimate and the image attribute from each of the least one image quantification neural network to an image assessment
- 208: provide a warning signal depending on the image assessment meeting a predetermined criterion
- 300: medical system
- 302: magnetic resonance imaging system
- 304: magnet
- 306: bore of magnet
- 308: imaging zone
- 309: field of view
- 310: magnetic field gradient coils
- 312: magnetic field gradient coil power supply
- 314: radio-frequency coil
- 316: transceiver
- 318: subject
- 320: subject support
- 330: pulse sequence commands
- 332: k-space data (medical data)
- 400: control the medical imaging device to acquire the medical data
- 402: reconstruct the medical image from the medical data
- 404: modify the operation of the medical imaging device if the warning signal is provided
- 502: uniformity estimation neural network
- 503: image uniformity estimate
- 504: image uniformity correction algorithm
- 506: noise filter
- 508: magnetic resonance weighting estimation neural network
- 510: magnetic resonance weighting dependency
- 512: resolution estimation neural network
- 514: resolution estimate
- 516: artifact estimation neural network
- 518: image artifact quantification
- 800: foreign object identification neural network
- 802: foreign object segmentation
- 804: mask construction module
- 806: image mask
- 900: optical images for training
- 902: varying noise level
- 904: varying resolution
- 1000: optical images with image masks added
- 1002: image masks
- 1100: receive an untrained neural network
- 1102: receive training data
- 1104: provide a noise estimation neural network or image quantification neural network by training the untrained neural network with the training data
- 1200: convolutional layers

## Claims

1. A medical system (100, 300) comprising:
- a memory (110) storing machine executable instructions (120) and multiple neural networks, wherein the multiple neural networks comprise a noise estimation neural network (122) and at least one image quantification neural network (124); wherein the noise estimation neural network is configured to output a noise estimate (128) of a medical image (126, 126') in response to receiving the medical image as input; wherein the at least one image quantification neural network is configured to output an image attribute (130) of the medical image in response to receiving the medical image as input;
- a computational system (104), wherein execution of the machine executable instructions causes the computational system to:
- receive (200) the medical image;
- receive (202) the noise estimate in response to inputting the medical image into the noise estimation neural network;
- receive (204) the image attribute in response to inputting the medical image into the image quantification neural network, wherein determination of the image attribute by the image quantification neural network is dependent upon the noise estimate;
- append (206) the noise estimate and the image attribute from each of the least one image quantification neural network to an image assessment (132);
- provide (208) a warning signal depending on the image assessment meeting a predetermined criterion.

2. The medical system of claim 1, wherein the medical system further comprises a medical imaging device (302) configured for acquiring medical data (332) descriptive of a subject (318), wherein execution of the machine executable instructions further causes the computational system to:
- control (400) the medical imaging device to acquire the medical data;
- reconstruct (402) the medical image from the medical data; and
- modify (404) the operation of the medical imaging device if the warning signal is provided, wherein modification of the operation of the medical imaging device comprises any one of the following: provide a user alert, append the warning signal to the medical image, generate a medical imaging device repair request, trigger a reacquisition of the medical data, displaying the resolution estimate, displaying the at least one image attribute, provide operating instructions, provide repair instructions, and combinations thereof.

3. The medical system of claim 2, wherein the medial device is a magnetic resonance imaging system (302).

4. The medical system of claim 1, 2, or 3, wherein the multiple neural networks further comprise a uniformity estimation neural network (502), wherein the uniformity estimation neural network is configured to output an image uniformity estimation in response to inputting the medical image into the uniformity estimation neural network, wherein execution of the machine executable instructions further causes the computational system to:
- receive the uniformity estimation in response to inputting the medical image into the uniformity estimation neural network; and
- appending the uniformity estimation to the image assessment.

5. The medical system of claim 4, wherein the uniformity estimation is received before inputting the medical image into the noise estimation neural network, wherein execution of the machine executable instructions further causes the computational system to perform any one of the following:
- apply an image uniformity correction algorithm (504) to the medical image before inputting the medical image into the noise estimation neural network, wherein the image uniformity correction algorithm is controlled by the uniformity estimation; and
- trigger a reacquisition of the medical image data if the uniformity estimation meets a predetermined uniformity criterion;
- request a magnetic shim readjustment of a magnet of the medical device, and
- combinations thereof.

6. The medical system of any one of the preceding claims, wherein the multiple neural networks further comprise a magnetic resonance weighting estimation neural network, wherein the magnetic resonance weighting estimation neural network is configured to estimate a magnetic resonance weighting dependency in response to receiving the medical image as input, wherein execution of the machine executable instructions further causes the computational system to:
- receive the magnetic resonance weighting dependency in response to inputting the medical image into the magnetic resonance weighting estimation neural network; and
- append the magnetic resonance weighting dependency to the image assessment.

7. The medical system of claim 1 or 2, wherein the medical imaging device is a computed tomography system, a C-arm computed tomography system, a planar X-ray system, a fluoroscopy system, a positron emission tomography system, a single-photon emission computed tomography system, or an ultrasound system.

8. The medical system of any one of the preceding claims, wherein execution of the machine executable instructions further causes the computational system to apply a noise removal algorithm to the medical image after receiving the noise estimate and before inputting the medical image into the at least one image quantification neural network.

9. The medical system of any one of claims 1 through 7, wherein the at least one image quantification neural network is further configured to receive the noise estimate as input, wherein execution of the machine executable instructions further causes the computational system to input the noise estimate into the image quantification neural network before receiving the image attribute.

10. The medical system of any one of claims 1 through 7, wherein each of the at least one image quantification neural network is selected from a group of image attribute specific image quantification neural networks using the noise estimate.

11. The medical system of any one of the preceding claims, wherein the at least one image quantification neural network comprises any one of the following:
- a resolution estimation neural network configured to output a resolution estimate of the medical image in response to receiving the medical image as input,
- an artifact estimation neural network configured to output an image artifact quantification in the medical image in response to receiving the medical image as input, and
- combinations thereof.

12. The medical system of any one of the preceding claims, wherein the memory further comprises a foreign object detection neural network (800), wherein the foreign object detection neural network is configured to output a foreign object segmentation (802) in the medical image in response to inputting the medical image, wherein each of the multiple neural networks is further configured to receive an object mask to identify a region to ignore in the medical image, wherein the object mask preferably has a smooth transition between a subject portion and a background portion, wherein execution of the machine executable instructions further causes the computational system to:
- receive the foreign object segmentation (802) in response to inputting the medical image into the foreign object detection neural network;
- construct the image mask from the foreign object segmentation; and
- input the image mask into each of the multiple neural networks.

13. The medical system of any one of the preceding claims, wherein the memory further contains an evaluation neural network (134) configured to output the warning signal if the image assessment meets the predetermined criterion, and wherein execution of the machine executable instructions further causes the computational system to:
- input the image assessment into the evaluation neural network; and
- receive the warning signal if the predetermined criterion is met.

14. execution by a computational system (104), wherein the multiple neural networks comprise a noise estimation neural network (122) and at least one image quantification neural network (124); wherein the noise estimation neural network is configured to output a noise estimate (128) of a medical image in response to receiving the medical image as input; wherein the at least one image quantification neural network is configured to output an image attribute (130) of the medical image in response to receiving the medical image as input; wherein execution of the machine executable instructions causes the computational system to:
- receive (200) the medical image;
- receive (202) the noise estimate in response to inputting the medical image into the noise estimation neural network;
- receive (204) the image attribute in response to inputting the medical image into the image quantification neural network, wherein determination of the image attribute by the image quantification neural network is dependent upon the noise estimate;
- append (206) the noise estimate and the image attribute from each of the least one image quantification neural network to an image assessment (132);
- provide (208) a warning signal depending on the image assessment meeting a predetermined criterion.

15. A method of training a neural network, wherein the method comprises:
- receiving (1100) an untrained neural network, wherein the untrained neural network has an input configured for receiving a medical image, wherein the untrained neural network has an output configured for outputting a noise estimate or an image attribute,
- receiving (1102) training data, wherein the training data comprises pairs of input images and ground truth data, wherein the ground truth data is noise ground truth data or image attribute ground truth data, wherein at least a portion of the pairs of input images are modified optical images (900, 1000) wherein the modified optical images are generated by adding noise to optical images or modeling the image attribute in the input images, wherein the modified optical images are further modified by applying an image mask (1002) to black out portions of the modified optical images; and
- provide (1104) a noise estimation neural network (122) or an image quantification neural network (124) by training the untrained neural network with the training data.
